# DEMANDE DE BREVET EUROPEEN

(11) **EP 3 290 966 A1**
(43) Date de publication de la demande: **07.03.2018**
(21) Numéro de dépôt: 17188969.4
(22) Date de dépôt: 01.09.2017
(51) Int. Cl.: G02B 5/00, F24S 10/00

(54) **SURFACE OPTIQUE ANTIREFLET, STRUCTUREE ET A GRANDE DUREE DE VIE, ET SON PROCEDE DE REALISATION**

(30) Priorité: 05.09.2016 FR 1658238
(71) Demandeur: Commissariat à l'Energie Atomique et aux Energies Alternatives, 75015 Paris (FR)
(72) Inventeur: OLLIER, Emmanuel, 38000 GRENOBLE (FR); DUNOYER, Nicolas, 38000 GRENOBLE (FR)
(74) Mandataire: Tanguy, Yannick

(57) **Abrégé**

Une surface optique antireflet, à absorption dans le domaine du visible et du proche infrarouge, comprend un substrat (4) en un matériau à base de carbure de silicium SiC et un ensemble (8) de microstructures (12, 14, 16, 18, 20, 22) de texturation tapissant une face d'exposition (6) du substrat (4).

Chaque microstructure (12, 14, 16, 18, 20, 22) est formée par une unique protubérance disposée sur et d'un seul tenant avec le substrat (4).

Les microstructures (12, 14, 16, 18, 20, 22) ont une même forme et mêmes dimensions, et sont réparties sur la face (6) du substrat (4) selon un motif périodique bidimensionnel, et

La forme de chaque microstructure (12, 14, 16, 18, 20, 22) est lisse et régulière avec un rayon de courbure qui varie continûment depuis le sommet de la microstructure jusqu'à la face (6) du substrat (4).

## Description

La présente invention concerne une surface antireflet structurée sur un matériau à base de carbure de silicium SiC..

La présente invention concerne en particulier une surface optique à forte absorption dans le domaine du visible et à émissivité réduite pouvant servir d'absorbeur solaire.

La présente invention concerne également un absorbeur solaire en céramique de type carbure de silicium, utilisé sur un matériau massif de carbure de silicium SiC ou comme couche absorbante de SiC déposée en surface d'un autre matériau, par exemple de l'acier, constituant par exemple un récepteur solaire. Ceci est l'application principale de cette invention.

Les absorbeurs solaires connus à ce jour utilisent du carbure de silicium structuré en volume ou des surfaces structurées dans un matériau différent du carbure du silicium ou des dépôts interférentiels obtenus à partir de matériaux différents du carbure de silicium.

Un premier document de F. Gomez-Garcia, intitulé « Thermal and hydrodynamic behaviour of ceramic volumetric absorbers for central receiver solar power plants : A review », publié dans Renewable and Sustainable Energy Reviews 57 52016), 648-658, décrit un absorbeur solaire en carbure de silicium structuré dans son volume sous la forme d'une porosité dans laquelle le rayonnement solaire est partiellement piégé.

Un deuxième document, l'article de Y.M. Song et al., intitulé « Antireflective grassy surface on glass substates with self masked dry etching », publié dans Nanoscale Research Letters 2013, 8 :505, décrit le principe d'un procédé de gravure plasma qui génère de par sa chimie un micro-masquage, lequel micro-masquage freine la gravure du matériau substrat par endroits. Il en résulte une microstructure comportant de relativement hauts rapports de forme qui réduisent la réflectivité de la surface. L'approche décrite dans ce document concerne uniquement le verre et n'est pas directement transposable sur le carbure de silicium. Les structures réalisées ici par ce procédé sont de tailles inférieures à celle réalisée dans notre proposition de brevet.

Un troisième document, l'article de J. Cai et al., intitulé « Recent advances in antireflective surfaces based on nanostructure arrays », publié dans Royal Society of Chemistry ©, Material Horizons 2015, 2, pages 37-53, décrit un premier procédé permettant de réaliser des structures pseudopériodiques, cette fois-ci sur du carbure de silicium SiC pour des applications d'éclairage par diodes électroluminescentes LED (en anglais Light Electroluminescent Diode). Les structures coniques obtenues par ce procédé sont réalisées par gravure au travers d'un masque de métal obtenu par démouillage de couches minces. La réflectivité à 6 degrés d'incidence sur la gamme spectrale allant de 390 à 785 nm est réduite de 20.5% à 1.62%. Le même article mentionne un deuxième procédé de réalisation de microstructures par gravure plasma d'un substrat de silicium Si au travers d'un masque de billes en polystyrène. Ce deuxième procédé est limité ici à la gravure d'un substrat de silicium et ne décrit pas le développement d'une forme des microstructures particulièrement résistante à l'oxydation.

A l'instar du troisième document, la demande de brevet WO 2013/171274 A1, formant un quatrième document, décrit un procédé de gravure par micro-masquage, le micro-masquage étant réalisé par démouillage de métaux, et décrit une surface micro-structurée réalisée sur des substrats de carbure de silicium SiC ou de nitrure de gallium GaN pour obtenir une fonction antireflet. Ce procédé de fabrication de surface micro-structurée est réalisé par une gravure plasma au travers de nano-îles de métal de 10 à 380nm de diamètres et de distances de séparation. Les îles sont formées de métaux comprenant argent, platine, aluminium, palladium. La base des cônes est inférieure à 400nm. Suivant un premier procédé de réalisation, les nano-îles d'or sont formées à partir de recuit de trois minutes à 650° C d'une couche d'or d'épaisseur 3 à 11 nanomètres. Suivant un deuxième procédé de réalisation, les nano-îles sont formées à partir d'un recuit de 33 minutes à 650°C sur une couche d'or d'épaisseur 13 à 21 nanomètres. Les dimensions caractéristiques des microstructures obtenues sont ainsi de petite dimension, inférieure à la centaine de nanomètres. Par ailleurs, l'utilisation de métal est généralement déconseillée dans la fabrication de dispositifs semi-conducteurs pour des questions de contamination et de modification de mobilité des porteurs. En outre, cette technique de démouillage de métal est sensible aux types de matériaux utilisés pour le substrat, à leur caractère mono ou polycristallin, ainsi qu'à la rugosité de surface du substrat, ce que l'on cherche à éviter.

A l'instar du troisième document, la demande de brevet WO 2015/114519 A1, formant un cinquième document, décrit un procédé de structuration de molybdène utilisant une gravure plasma d'un substrat de molybdène au travers d'un masque de billes en silice ou polystyrène. Les microstructures obtenues décrites sont par exemple de forme pyramidale, et possèdent des arêtes vives, favorisant l'usure de la surface micro-structurée lorsqu'elle est soumise à un environnement corrosif. On cherche à améliorer les performances des absorbeurs molybdène ainsi obtenus, notamment leur durée de vie lorsque ces surfaces sont soumises à une température élevée et un environnement oxydant comme l'air. En effet, ces surfaces en molybdène présentent une mauvaise tenue en température sous air du fait de son oxydation.

Le problème technique est de proposer des surfaces optiques antireflet pour des absorbeurs solaires qui présentent à la fois une capacité d'absorption du rayonnement solaire élevée et une tenue de cette capacité à température élevée et dans un milieu oxydant comme l'air.

A cet effet, l'invention a pour objet une surface optique antireflet, à absorption dans le domaine du visible et du proche infrarouge, en particulier pour des absorbeurs solaires thermiques, apte à fonctionner à des températures élevées, et comprenant un substrat, constitué d'une épaisseur d'un premier matériau à base de carbure de silicium SiC, et ayant une face plane ou courbe d'exposition, et un ensemble de microstructuresde texturation tapissant la face. La surface optique antireflet est caractérisée en ce que chaque microstructure est formée par une unique protubérance réalisée dans le premier matériau, disposée sur et d'un seul tenant avec le substrat, et les microstructures ont une même forme et mêmes dimensions, et sont réparties sur la face du substrat selon un motif périodique bidimensionnel, et la forme de chaque microstructure est lisse et régulière en ayant un sommet unique et un rayon de courbure qui varie continûment depuis le sommet de la microstructure jusqu'à la face du substrat.

Suivant des modes particuliers de réalisation, la surface optique antireflet comprend l'une ou plusieurs des caractéristiques suivantes :
.- le premier matériau à base de carbure de silicium est du carbure de silicium SiC monocristallin ou poly-cristallin, ou du carbure de silicium SiC monocristallin ou poly-cristallin, enrichi en silicium sous forme d'îlots de silicium Si ;
.- la surface de chaque microstructure présente un même maximum en hauteur h situé dans une zone centrale et correspondant à la hauteur de la microstructure et décroit depuis le sommet vers un bord B d'une base de la microstructure ;
.- la surface de chaque microstructure comporte une partie de la surface d'une calotte sphérique, elliptique ou parabolique ;
.- chaque microstructure a sensiblement un même diamètre de base d supérieur ou égal à 0,3 µm et inférieur ou égal 5 µm, de préférence compris entre 0,5 µm et 2 µm, et la même hauteur maximale h de chaque microstructure est supérieure ou égale à 0,5 fois le diamètre de base d et inférieure ou égale à 1,5 fois le diamètre de base d ;
.- le rayon de courbure de chaque microstructure est supérieur ou égal à 0,1 µm et distribué autour d'une valeur centrale de rayon de courbure comprise entre 0,25 µm et 1 µm ;
.- l'agencement des microstructures sur la face d'exposition du substrat est réalisé sous la forme d'un pavage de réseaux élémentaires de microstructures, les réseaux élémentaires ayant un même motif de maille compris dans l'ensemble formé par les mailles hexagonales, les mailles carrés, les mailles triangulaires, et étant caractérisé par un degré de compacité des microstructures entre elles.

L'invention a également pour objet un absorbeur solaire comportant une surface optique telle que définie ci-dessus.

L'invention a également pour objet un procédé de fabrication d'une surface optique antireflet, en particulier pour des absorbeurs solaires thermiques, apte à fonctionner à des températures élevées. Le procédé de fabrication comprend une première étape consistant à fournir un substrat, constitué d'une épaisseur d'un premier matériau à base de carbure de silicium SiC, et ayant une face d'exposition plane ou courbe. Le procédé de fabrication est caractérisé en ce qu'il comprend en outre une deuxième étape, exécutée à la suite de la première étape, consistant à réaliser un ensemble de microstructures de texturation, tapissant la face, chaque microstructure étant formée par une unique protubérance réalisée dans le premier matériau, et disposée sur et d'un seul tenant avec le substrat, et les microstructures ayant une même forme et mêmes dimensions, étant réparties sur la face du substrat selon un motif périodique bidimensionnel, et la forme de chaque microstructure étant lisse et régulière en ayant un sommet unique et un rayon de courbure qui varie continument depuis le sommet jusqu'à la face.

Suivant des modes particuliers de réalisation, le procédé de fabrication d'une surface optique antireflet comprend l'une ou plusieurs des caractéristiques suivantes :
.- la première étape consiste soit à fournir du carbure de silicium SiC monocristallin ou poly-cristallin, ou soit à fournir du carbure de silicium SiC monocristallin ou poly-cristallin, enrichi en silicium sous forme d'îlots de silicium Si ;
.- la première étape consiste soit à comprimer de manière isostatique une poudre de carbure de silicium SIC, ou soit à faire croitre du carbure de silicium SiC poly-cristallin, ou soit à faire croitre du carbure de silicium SiC monocristallin, ou soit à infiltrer du silicium à haute température dans une matrice carbonée poreuse ;
.- la deuxième étape comprend les étapes successives consistant à : dans une troisième étape déposer une monocouche compacte de particules en un deuxième matériau à la surface du substrat, et dans une quatrième étape graver par un procédé de gravure sèche le substrat du côté de la face d'exposition au travers d'interstices existant entre les particules, le deuxième matériau étant compris dans l'ensemble formé par la silice (SiO₂), le polystyrène (PS) ou tout autre matériau sous forme de billes de dimension requise ;
.- une réduction de la taille et de la forme des particules par gravure sèche est mise en oeuvre, soit dans une cinquième étape exécutée pendant la quatrième étape en même temps que la gravure sèche du substrat, soit dans une sixième étape interposée entre la troisième étape et la quatrième étape ;
.- le dépôt du film compact de particules mis en oeuvre au cours de la troisième étape est réalisé soit par une technique de dépôt faisant intervenir l'interface air/liquide pour ordonner les particules comprise dans l'ensemble formé par la technique de Langmuir Blodgett, la technique de Langmuir Shaefer, la méthode vortique de surface, la technique du transfert par flottaison, la technique de l'écoulement laminaire fin dynamique et mobile, soit par une technique de depôt faisant intervenir exclusivement des particules en solution colloïdale comprise dans l'ensemble formé par le dépôt électrophorétique, le dépôt horizontal par évaporation d'un film, le dépôt par évaporation d'un bain, le dépôt par retrait vertical d'un substrat immergé et le dépôt horizontal par retrait forcé de la ligne de contact ;
.- le procédé de gravure sèche mis en oeuvre dans la quatrième étape est une gravure réactive ionique utilisant un mélange gazeux d'hexafluorure de soufre (SF₆) et de dioxygène (O₂) dans un rapport de 5/3 ;
.- la vitesse de gravure du matériau substrat Vsub et la vitesse de gravure Vpar des particules, la sélectivité de gravure Sg, définie comme le rapport de la vitesse de gravure du substrat sur la vitesse de gravure des particules, et le temps de gravure sont réglés de façon à consommer la totalité des particules et éviter la création d'arêtes vives sur la surface du substrat ;
.- le procédé de fabrication comprend une septième étape de retrait des particules exécutée après la quatrième étape.

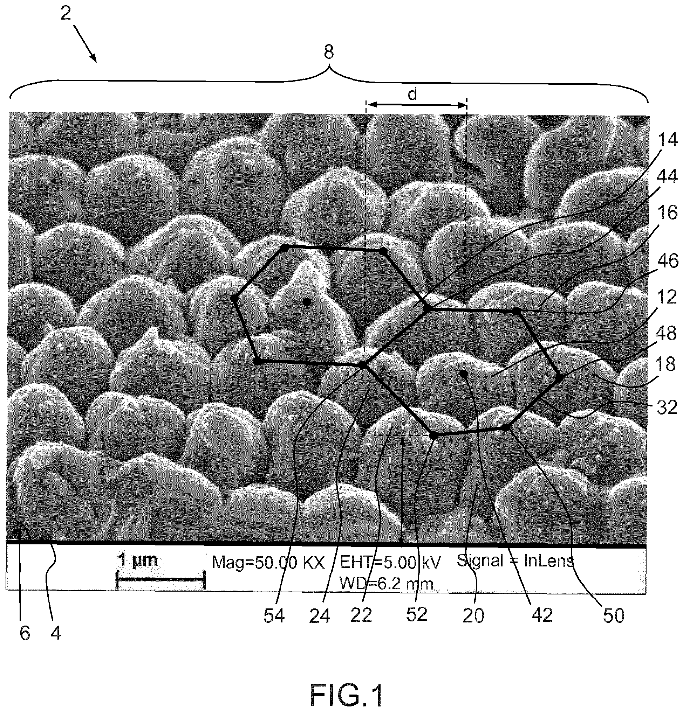

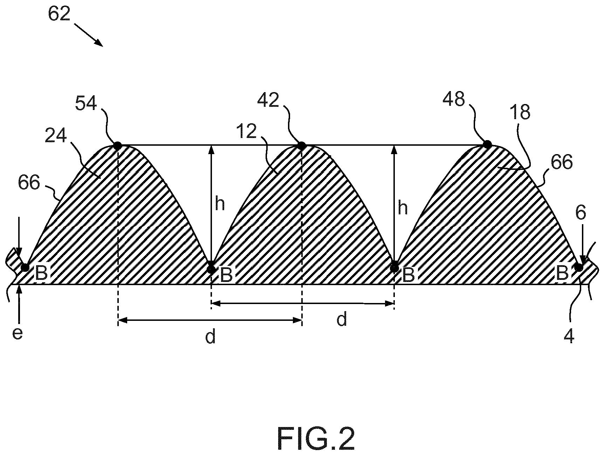

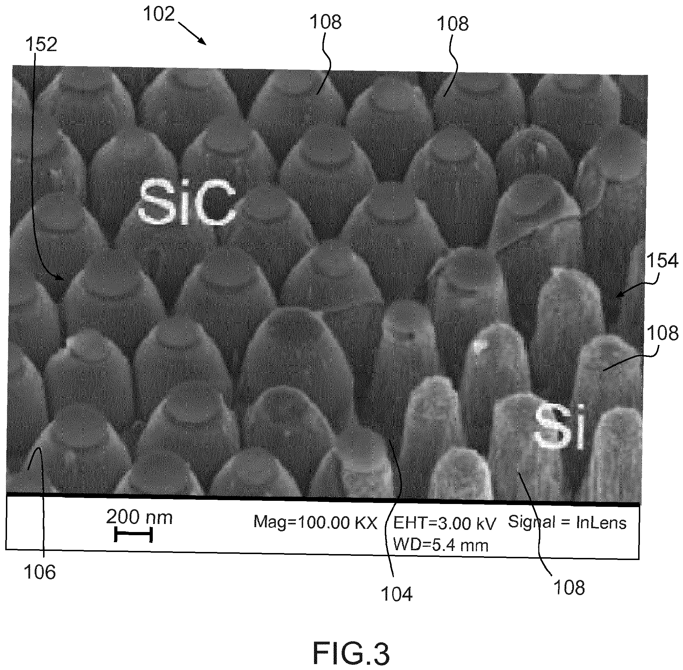

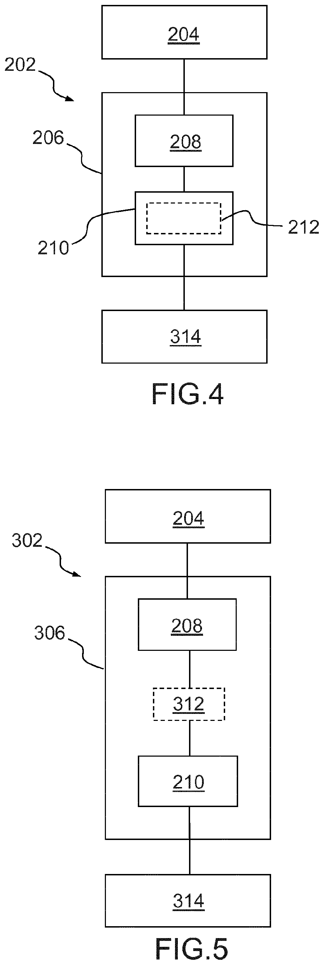

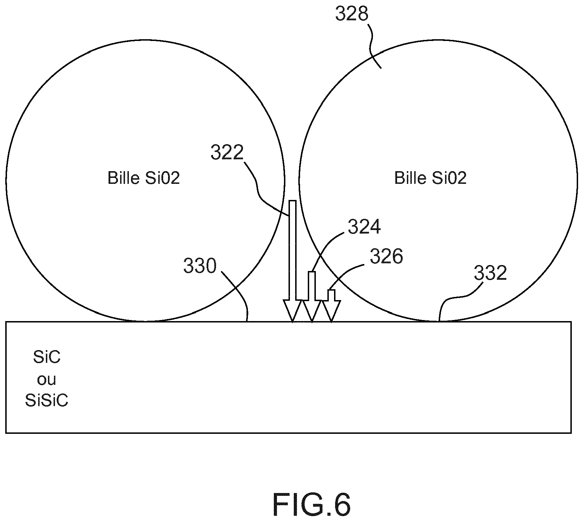

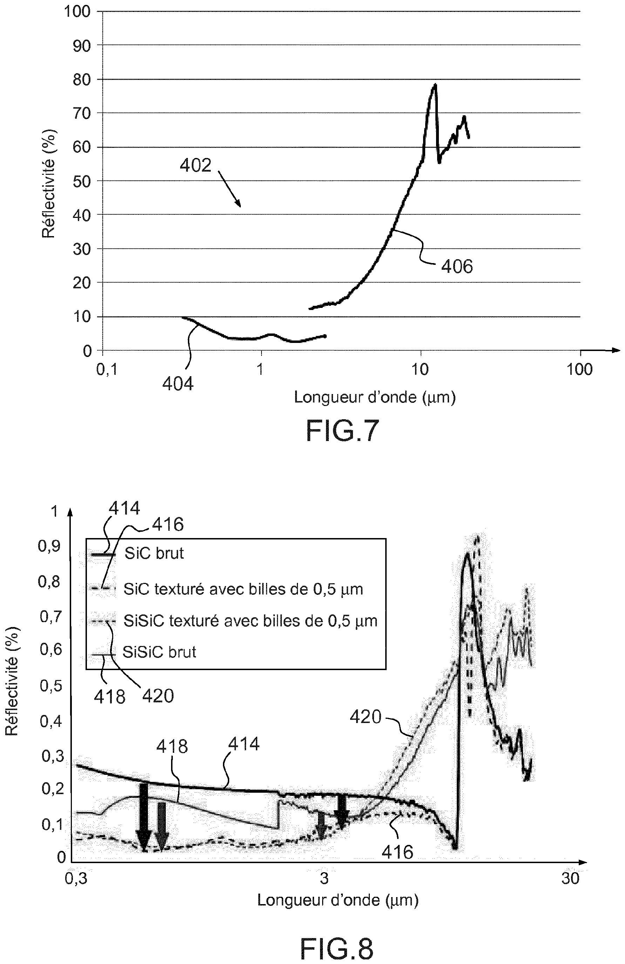

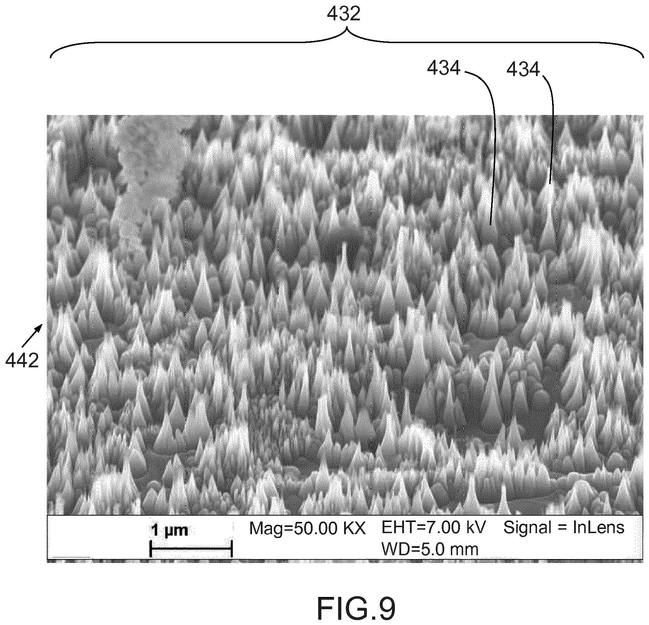

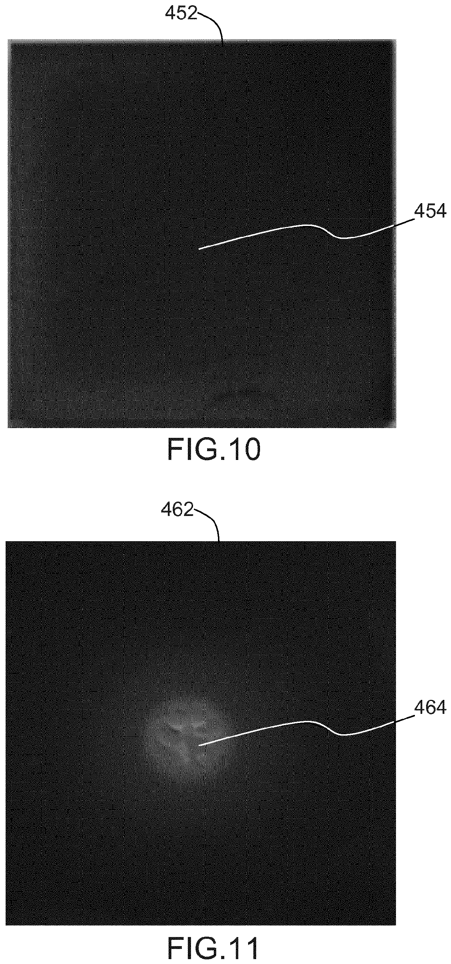

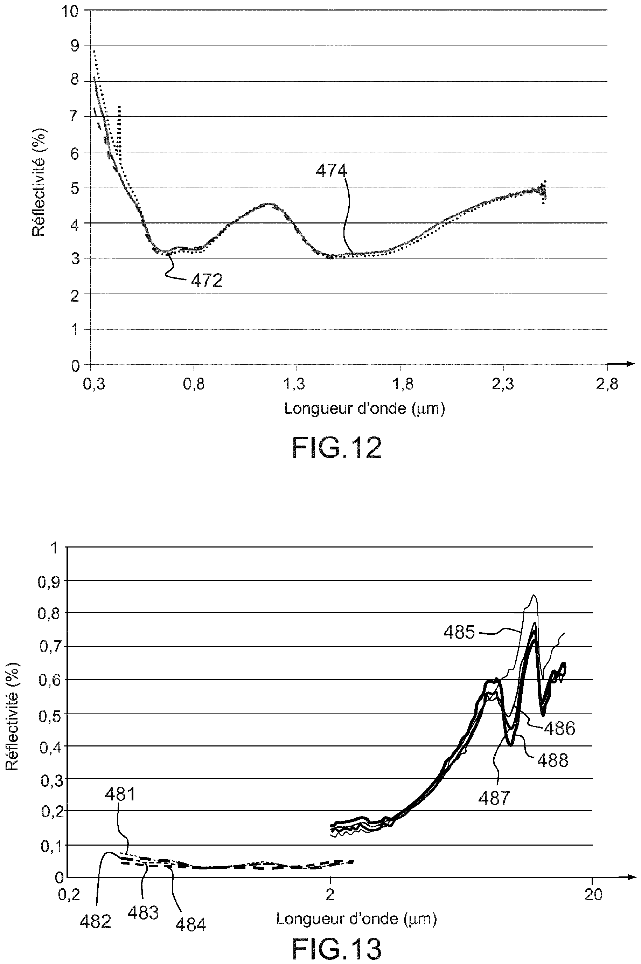

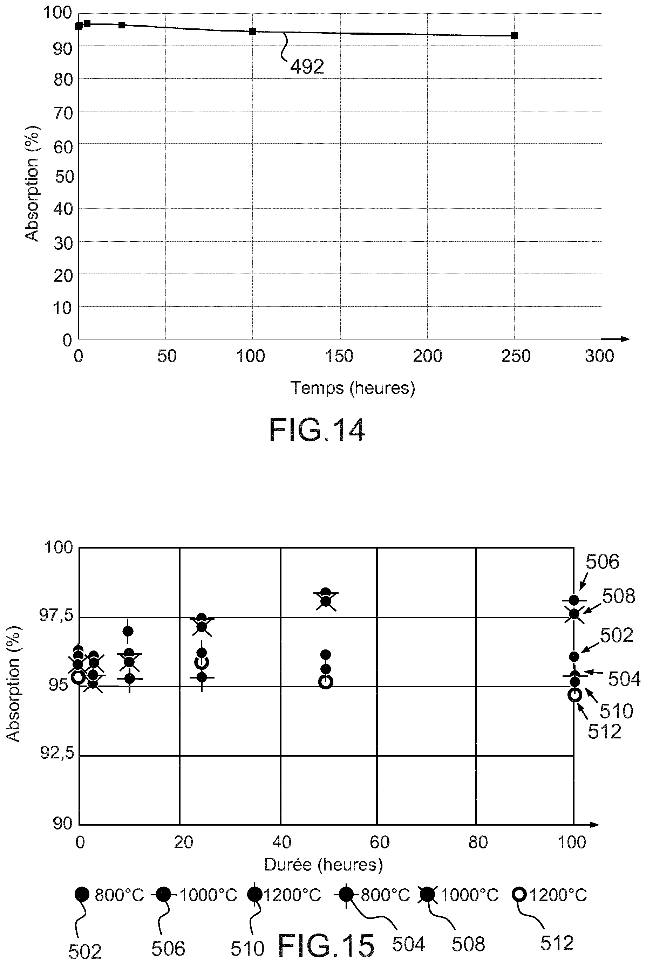

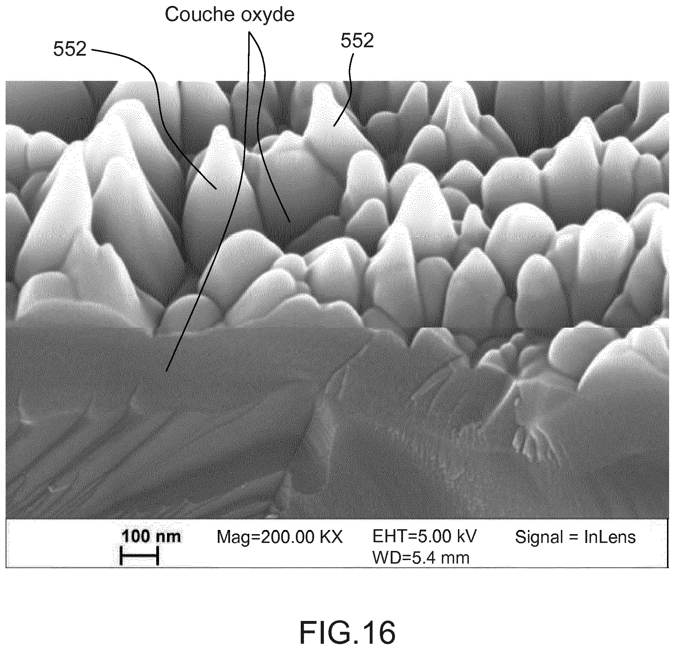

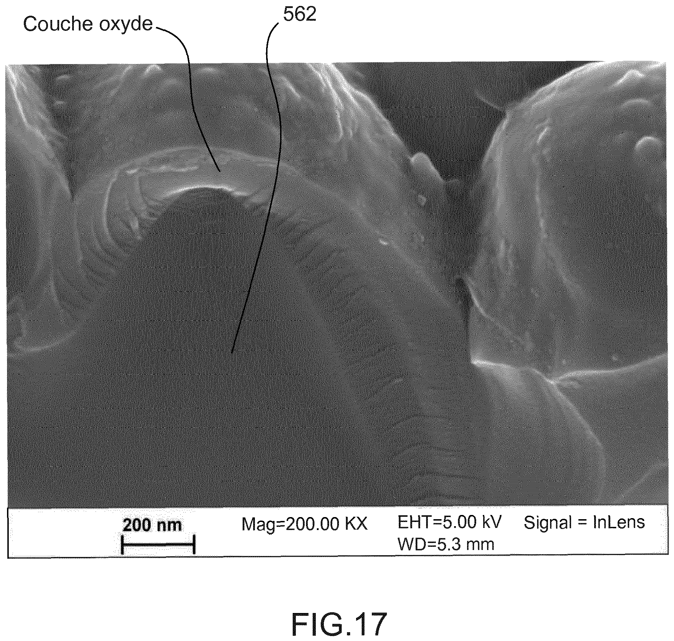

L'invention sera mieux comprise à la lecture de la description de plusieurs formes de réalisation qui va suivre, donnée uniquement à titre d'exemple et faite en se référant aux dessins sur lesquels :
.- la Figure 1 est une vue par microscopie électronique à balayage d'une première forme de réalisation d'une surface optique antireflet, micro-structurée selon l'invention, en carbure de silicium SiC polycristallin, obtenue par gravure plasma au travers d'un masque de billes auto-organisées de diamètre 1 micron (µm) ;
.- la Figure 2 est une vue en coupe dans le sens de leur hauteur et passant leurs sommets de trois microstructures adjacentes de la surface optique antireflet de la Figure 1 ;
.- la Figure 3 est une vue par microscopie électronique à balayage d'une deuxième forme de réalisation d'une surface optique antireflet, micro-structurée selon l'invention, en carbure de silicium enrichi en silicium SiCSi poly-cristallin, obtenue par gravure plasma au travers d'un masque de billes auto-organisées de diamètre 0,5 micron (µm) ;
.- la Figure 4 est un ordinogramme général d'un procédé de fabrication d'une surface optique texturée des Figures 1 à 3 suivant un premier mode de réalisation ;
.- la Figure 5 est un ordinogramme d'un deuxième mode de réalisation d'un procédé de fabrication de la structure de surface texturée des Figures 1 à3;
.- la Figure 6 une vue d'un mécanisme principal de la gravure sèche mise en oeuvre dans les procédés de fabrication des Figures 1 à 3;
.- la Figure 7 est une vue des spectres de réflectivité, mesurés dans les domaines visibles et infrarouge pour la surface optique antireflet de la deuxième forme de réalisation de la Figure 3 ;
.- la Figure 8 est une vue comparative des spectres de réflectivité mesurés dans les domaines visibles et infrarouge pour les surfaces optiques antireflet des première et deuxième formes de réalisation des Figures 1 et 3 ;
.- la Figure 9 est une vue d'une surface de carbure de silicium SiC, différente de celle de l'invention, ayant des microstructures parasites et obtenue par gravure plasma en l'absence d'utilisation d'un masque de billes de silice auto-organisées ;
.- la Figure 10 est une vue optique à l'échelle d'une portion d'une surface antireflet de carbure de silicium enrichie SiCSi suivant la deuxième forme de réalisation de la Figure 3, obtenue après une illumination solaire sous 745 W/m² concentrée avec un facteur de concentration 1000 en un spot de concentration de 10 mm de diamètre et une montée en température en ce spot à 676°C ;
.- la Figure 11 est une vue optique à l'échelle, analogue à celle de la Figure 7, d'une portion d'une surface de molybdène Mo, nano-structurée suivant le procédé de la demande de brevet précité WO 2015/114519 A1, et obtenue après une illumination solaire sous 810 W/m2 concentrée avec un facteur de concentration 1000 en un spot de concentration de 10 mm de diamètre et l'atteinte d'une température en ce spot de 582°C ;
.- la Figure 12 est une vue des spectres de réflectivité d'un absorbeur en carbure de silicium enrichi SiCSi dont la surface est structurée suivant la deuxième forme de réalisation de la Figure 3, les spectres étant mesurés avant et après exposition à un rayonnement solaire concentré par une lentille de Fresnel de grossissement 1000 et de dimensions 33x33 cm2 sous 900 W/m2 de radiation solaire incidente ;
.- la Figure 13 est une vue des spectres de réflectivité dans les domaines du visible et de l'infrarouge d'un absorbeur en carbure de silicium enrichi SiCSi dont la surface est structurée suivant la deuxième forme de réalisation de la Figure 3, les spectres étant mesurés à différents instants lors d'un vieillissement sous air à une température de 1000°C ;
.- la Figure 14 est une vue de l'évolution de l'absorption solaire d'un absorbeur solaire en carbure de silicium enrichi SiCSi, la surface d'exposition de l'absorbeur étant structurée suivant la deuxième forme de réalisation de la Figure 3 et exposée à l'air à une température de 1000°C;
.- la Figure 15 est une vue de l'évolution temporelle de l'absorption solaire de deux échantillons d'un absorbeur solaire en carbure de silicium SiC, fabriqués selon le même procédé de fabrication, la surface d'exposition de l'absorbeur étant structurée suivant la première forme de réalisation de la Figure 1 et exposée à l'air à différentes températures ;
.- la Figure 16 est une vue par microscopie à balayage électronique de l'effet technique de la forme accidentée ou irrégulière et de la petite taille des microstructures parasites de la Figure 9 sur les performances en vieillissement de la surface micro-structurée en termes de modifications de la forme et de la taille des microstructures, le vieillissement sous air étant visualisé après 250 heures à une température permanente de 1000°C ;
.- la Figure 17 est une vue par microscopie à balayage électronique de l'effet technique de la forme régulière et de taille des microstructures d'une surface selon l'invention des Figures 1 et 3 sur les performances en vieillissement de la surface micro-structurée en termes de modifications de la forme et de la taille des microstructures, le vieillissement sous air étant visualisée après 250 heures à une température permanente de 1000°C ;

L'invention porte sur la géométrie de la structuration des matériaux à base de carbure de silicium et sur ses procédés d'obtention qui permettent, d'augmenter dans une gamme de longueur d'ondes prédéterminée l'absorption du rayonnement solaire et de disposer en même temps d'une solution extrêmement résistante, en termes d'une stabilité élevée des formes et des dimensions des microstructures, à haute température et en milieu corrosif, par exemple un milieu oxydant comme l'air.

Suivant la Figure 1, une surface optique antireflet 2, à absorption dans le domaine du visible et du proche infrarouge, en particulier pour des absorbeurs solaires thermiques, apte à fonctionner à des températures élevées, comprend un substrat 4, constitué d'une épaisseur e d'un premier matériau à base de carbure de silicium SiC de premier type, c'est-à-dire du carbure de silicium SiC poly-cristallin, et ayant une face 6 plane ou courbe, d'exposition à de la lumière, solaire par exemple.

La surface optique antireflet 2 comprend également un ensemble 8 de microstructures 12, 14, 16, 18, 20, 22, 24 de texturation tapissant la face 6 d'exposition du substrat.

Ici, seules sept microstructures 12, 14, 16, 18, 20, 22, 24 de texturation ont été désignées par une référence numérique par souci de simplification de la description.

Chaque microstructure 12, 14, 16, 18, 20, 22, 24 de texturation est formée par une unique protubérance réalisée dans le premier matériau, disposée sur et d'un seul tenant avec le substrat 4.

Les microstructures 12, 14, 16, 18, 20, 22, 24 ont une même forme, aux variations locales de matériaux ou procédés près, et mêmes dimensions ; elles s'étendent parallèlement au moins localement les unes par rapport aux autres suivant une direction locale, perpendiculaire à la face d'exposition 6, ici solaire, en l'emplacement de chaque microstructure 12, 14, 16, 18, 20, 22, 24.

Les microstructures 12, 14, 16, 18, 20, 22, 24 sont réparties sur la face d'exposition solaire 6 du substrat 4 selon un motif périodique bidimensionnel 32. Ici, la forme du motif périodique bidimensionnel 32 est par exemple hexagonale compacte.

La forme de chaque microstructure 12, 14, 16, 18, 20, 22, 24 est lisse et régulière en ayant un sommet unique, 42, 44, 46, 48, 50, 52, 54 et un rayon de courbure qui varie continûment depuis le sommet de la microstructure 12, 14, 16, 18, 20, 22, 24 jusqu'à la face 6 d'exposition du substrat 4.

Suivant la Figure 2, un profil 62 de coupe partielle de l'ensemble 8 des microstructures, ici les trois microstructures 24, 12, 18, alignées et adjacentes entre elles, et du substrat 4 en support, comporte une ligne de contour 66 continue de la surface 6 d'exposition.

Suivant les Figures 1 et 2, la surface de chaque microstructure 12, 14, 16, 18, 20, 22, 24 présente un même maximum en hauteur h, situé dans une zone centrale entourant son sommet et correspondant à la hauteur de la microstructure 12, 14, 16, 18, 20, 22, 24, et décroit depuis le sommet vers un bord B d'une base de la microstructure 12, 14, 16, 18, 20, 22, 24.

Les microstructures 12, 14, 16, 18, 20, 22, 24 de texturation sont obtenues dans cet exemple par gravure plasma au travers d'un masque de billes auto-organisées ayant un diamètre égal à un micron. Le diamètre d d'une microstructure située respectivement en dessous de chaque bille est ici corrélativement d'environ 1 micromètre et le haut de la forme de chaque microstructure 12, 14, 16, 18, 20, 22, 24 peut être décrit ici par une demi-sphère ou un cône arrondi ou le sommet d'une parabole.

Ici et de manière préférée, toutes les microstructures adjacentes sont jointives en leurs bords au niveau de la face d'exposition, et leur surface de jonction présente un point ou une ligne de courbure discontinue.

En variante, les microstructures adjacentes ne sont pas jointives en leurs bords au niveau de la face d'exposition, et la courbe de jonction de chaque microstructure avec la face d'exposition présente une ligne de courbure discontinue.

En variante, les microstructures adjacentes ne sont pas jointives en leurs bords au niveau de la face d'exposition, et sur un voisinage de la courbe de jonction de chaque microstructure avec la face d'exposition, la courbure est continue.

Des diamètres de 0.5 micron peuvent être utilisés et produisent une performance optique analogue à celle obtenue avec un diamètre de 1 micron. L'arrangement des microstructures 12, 14, 16, 18, 20, 22, 24 dans le plan local de la surface structurée est périodique à l'instar de l'arrangement du tapis de billes utilisé, le motif périodique de l'agencement étant de préférence hexagonal compact mais pourrait être différent.

Suivant la Figure 1 qui est une vue de dessus en perspective de la surface optique antireflet sélective 2, il apparait clairement que le motif périodique bidimensionnel 32 est hexagonal compact et que le réseau des microstructures ainsi constitué est un réseau compact à maille hexagonale.

Suivant la Figure 3 et un deuxième mode de réalisation de l'invention, une surface optique antireflet 102 est structurée et élaborée cette fois-ci dans un matériau à base de carbure de silicium SiC de deuxième type SiSiC qui, à l'instar de la surface antireflet de la Figure 2 comporte du carbure de silicium SiC, mais qui est enrichi en silicium Si en présentant des îlots de silicium Si. Ce deuxième type de matériau SiSiC est par exemple obtenu par la formation d'un matériau carboné poreux à partir d'une pyrolyse puis une infiltration d'un précurseur de silicium est réalisée à haute température pour former le composé de carbure de silicium SiSiC. Dans le cas de ce deuxième type de matériau, la structure obtenue est analogue à cette obtenue pour le carbure de silicium SiC du matériau de premier type de la Figure 1 et résulte en un arrangement hexagonal compact de structures qui peuvent être décrites par une forme de dômes paraboliques ou de cônes arrondis, voire de demi-sphères dont le diamètre est ici de 0.5 micron.

Ici sur la Figure 3, deux zones du matériau du substrat 104 et des microstructures 108 reposant sur la face d'exposition 106 du substrat 104 sont représentées partiellement. Une première zone 152 en carbure de silicium SiC est illustrée en coin supérieur gauche de la Figure 3 et une deuxième zone 154 en silicium Si est illustrée en coin inférieur droit de la Figure 3, laquelle deuxième zone 154 forme un îlot de silicium Si du substrat 104.

Il est à remarquer que les résidus de billes de silice visibles sur le haut de certaines microstructures 108 ne font pas partie desdites microstructures et que ces résidus de billes auront disparu en fin du procédé de fabrication du fait de leur consommation par le procédé de fravure.

De manière générale, une surface optique antireflet selon l'invention, à absorption dans le domaine du visible et du proche infrarouge, en particulier pour des absorbeurs solaires thermiques, apte à fonctionner à des températures élevées, comprend un substrat, constitué d'une épaisseur d'un premier matériau à base de carbure de silicium SiC, et ayant une face d'exposition plane ou courbe, et un ensemble de microstructures de texturation tapissant la face d'exposition.

Chaque microstructure est formée par une unique protubérance réalisée dans le premier matériau, disposée sur et d'un seul tenant avec le substrat. Les microstructures ont une même forme et mêmes dimensions, et sont réparties sur la face du substrat selon un motif périodique bidimensionnel, et la forme de chaque de chaque microstructure est lisse et régulière en ayant un sommet unique et un rayon de courbure qui varie continûment depuis le sommet de la microstructure jusqu'à la face du substrat.

Le premier matériau à base de carbure de silicium est compris dans l'ensemble formé par le carbure de silicium SiC monocristallin, le carbure de silicium poly-cristallin, le carbure de silicium SiC monocristallin ou poly-cristallin, enrichi en silicium sous forme d'îlots de silicium Si.

De manière particulière, la surface de chaque microstructure comporte une partie de la surface d'une calotte sphérique ou elliptique ou parabolique.

De manière générale et indépendamment de la forme de réalisation de la surface optique antireflet sélective chaque microstructure a sensiblement un même diamètre de base d supérieur ou égal à 0,3 µm et inférieur ou égal 5 µm, de préférence compris entre 0,5 µm et 2 µm, et la même hauteur maximale h de chaque microstructure est supérieure ou égale à 0,5 fois le diamètre de base d et inférieure ou égale à 5 fois le diamètre de base d.

Le rayon de courbure ρ de chaque microstructure est supérieur ou égal à 0,1 µm et distribué autour d'une valeur centrale ρ₀ de rayon de courbure comprise entre 0,25 µm et 1 µm.

De manière générale, l'agencement des microstructures sur la face d'exposition du substrat est réalisé sous la forme d'un pavage de réseaux élémentaires de microstructures, les réseaux élémentaires ayant un même motif de maille compris dans l'ensemble formé par les mailles hexagonales, les mailles carrés, les mailles triangulaires, et étant caractérisé par un degré de compacité des microstructures entre elles.

Suivant la Figure 4 et une première forme de réalisation, un procédé 202 de fabrication de la texturation des surfaces optiques antireflet telles que décrites par exemple dans les Figures 1 à 3 comprend un ensemble d'étapes 204,206,208,210,212.

Ce procédé convient en particulier à la fabrication d'absorbeurs solaires thermiques, la surface texturée fabriquée étant apte à fonctionner à des températures élevées et/ou sous un environnement oxydant comme par exemple l'air.

Dans une première étape 204, un substrat est fourni, constitué d'une épaisseur d'un premier matériau à base de carbure de silicium SiC, stable thermiquement et ayant une face d'exposition plane ou courbe.

Dans une deuxième étape 206, exécutée à la suite de la première étape 204, un ensemble de microstructures de texturation tapissant la face du substrat est réalisée.

Chaque microstructure est formée par une unique protubérance réalisée dans le premier matériau, et disposée sur et d'un seul tenant avec le substrat.

Les microstructures ont une même forme et mêmes dimensions, et sont réparties sur la face d'exposition du substrat selon un motif périodique bidimensionnel.

La forme de chaque microstructure est lisse et régulière en ayant un sommet unique et un rayon de courbure qui varie continument depuis le sommet de la microstructure jusqu'à la face du substrat.

La première étape 204 consiste :
soit à fournir du carbure de silicium SiC monocristallin ou poly-cristallin, ou
soit à fournir du carbure de silicium SiC monocristallin ou poly-cristallin, enrichi en silicium sous forme d'îlots de silicium Si.

De manière particulière la première étape 204 consiste :
soit à comprimer de manière isostatique une poudre de carbure de silicium SIC, ou
soit à faire croitre du carbure de silicium SiC poly-cristallin, ou
soit à faire croitre du carbure de silicium SiC monocristallin, ou
soit à infiltrer du silicium à Si haute température dans une matrice carbonée poreuse.

La deuxième étape 206 comprend une troisième étape 208 et une quatrième étape 210, exécutées successivement.

Dans la troisième 208 étape, une monocouche compacte de particules de masquage en un deuxième matériau est déposée à la surface du substrat, le deuxième matériau étant compris dans l'ensemble formé par la silice (SiO₂), le polystyrène (PS) ou tout autre matériau sous forme de billes de dimension requise.

Dans la quatrième étape 210, le substrat est gravé par un procédé de gravure sèche du côté de la face d'exposition au travers d'interstices existant entre les particules,

Pendant la quatrième étape 210, c'est-à-dire en même temps que la gravure sèche du substrat, dans une cinquième étape 212 une réduction de la taille et de la forme des particules par gravure sèche est mise en oeuvre.

Suivant la Figure 5 et une deuxième forme de réalisation dérivée de la première forme de réalisation, un procédé 302 de fabrication d'une surface optique antireflet, texturée pour par exemple pour des absorbeurs solaires thermiques et telle que décrite par exemple dans les Figures 1 à 3, comprend un ensemble d'étapes 204, 306, 208, 210, 312.

La première étape 204 du procédé 302 de la Figure 5 est identique à la première étape du procédé 202 de la Figure 4.

La deuxième étape 306 du procédé 302 de la Figure 5 comprend à l'instar du procédé 202 de la Figure 4 la troisième étape 208 et la quatrième étape 210.

La deuxième étape 306 du procédé 302 de la Figure 5 diffère du procédé 202 de la Figure 4 en ce qu'elle comprend une sixième étape 312, interposée entre la troisième étape 208 et la quatrième étape 210, dans laquelle une réduction de la taille et de la forme des particules par gravure sèche est mise en oeuvre sans interaction avec la gravure sèche du substrat.

Suivant les Figures 4 et 5, les procédés de fabrication 202, 302 comprennent une septième étape 314 de retrait des particules, exécutée après la quatrième étape 210. Par exemple, la septième étape 314 consiste à nettoyer la surface texturée en la plongeant dans un bain d'éthanol en présence d'ultrasons pendant au moins 5 minutes.

Suivant les Figures 4 et 5, le dépôt du film compact de particules mis en oeuvre au cours de la troisième étape 208 est réalisé, soit par une technique de dépôt d'une première famille faisant intervenir l'interface air/liquide pour ordonner les particules, soit par une technique de dépôt d'une deuxième famille faisant intervenir exclusivement des particules en solution colloïdale.

La première famille de techniques de dépôt de particules en un film compact est l'ensemble formé par la méthode de transfert d'un monofilm de particules compactées sur un liquide porteur en mouvement, la technique de Langmuir Blodgett, la technique de Langmuir Shaefer, la méthode vortique de surface, la technique du transfert par flotaison, la technique de l'écoulement laminaire fin dynamique et mobile.

La deuxième famille de dépôt de particules en un film compact est l'ensemble formé par le dépôt électrophorétique, le dépôt horizontal par évaporation d'un film, le dépôt par évaporation d'un bain, le dépôt par retrait vertical d'un substrat immergé et le dépôt horizontal par retrait forcé de la ligne de contact.

Les billes de masquage déposées sont préférentiellement en SiO₂, mais peuvent être de nature différente tant que les paramètres principaux de la gravure sont respectés.

Les paramètres appliqués pour réaliser les dépôts de billes lorsque la méthode utilisée est la méthode de transfert d'un monofilm de particules compactées sur un liquide porteur en mouvement et lorsqu'une surface texturée des Figures 1 à 3 est fabriquée sont décrits ci-après dans le tableau 1 suivant.

**Tableau 1**

| Paramètres | Valeur appliquée | Min | Max |
|---|---|---|---|
| Diamètre des particules de silice | 1µm ou 540nm | 0,01µm | 10µm |
| Solvant | Butanol | | |
| Concentration | 35g/l | 10g/l | 50g/l |
| Liquide porteur | Eau déionisée | | |
| Débit du liquide porteur | 400 ml/min | 100 ml/min | 1000ml/min |
| Débit d'injection des particules | 0,5 ml/min | 0,01 l/min | 3 ml/min |
| Vitesse de tirage | 1 cm/min | 0,1 cm/min | 10 cm/min |

Suivant les Figures 4 et 5, le procédé de gravure sèche mis en oeuvre dans la quatrième étape 210 est par exemple une gravure réactive ionique utilisant un mélange gazeux d'hexafluorure de soufre (SF₆) et de dioxygène (O₂) dans un rapport 5/3. D'autres gaz, aptes à graver sélectivement le matériau par rapport aux billes, pourront également être utilisés.

De manière générale et indépendamment du procédé de gravure sèche utilisé, la vitesse de gravure du matériau du substrat Vmat et la vitesse de gravure Vpar des particules sont supérieures à 50 nm par minute, et la sélectivité de gravure Sg, définie comme le rapport de la vitesse de gravure du matériau du substrat sur la vitesse de gravure des particules, est comprise entre 0,5 et 10.

Lorsqu'une surface texturée des Figures 1 à 3 est fabriquée, le procédé de gravure sèche décrit ci-dessous peut être utilisé. Ce procédé de gravure met en oeuvre :
- des billes de silice SiO₂ de 530nm ou 1 µm déposées par voie colloïdale avec flottaison d'une monocouche compacte de billes sur un solvant et report sur le substrat à texturer,
- un réacteur de type « gravure par ion réactifs » RIE (dénommé en anglais Reactive Ion Etching),
- un générateur à la fréquence de 13,56GHz,
- un mélange de gaz de SF₆ et d'O₂,
- des flux de 5sccm pour SF₆ et 3sccm pour O₂,
- une pression de 25mT,
- une puissance de 0.25W/cm² (20W sur une sole de diamètre de 10cm), et
- une température de substrat égale à 50°C.

Le temps du procédé de gravure dépend du type de matériau utilisé pour le substrat et du diamètre des billes utilisé.

Lorsque des billes de diamètre 530 nm sont utilisées, le temps du procédé de gravure est égal à 600s pour un matériau de substrat de premier type SiC, et égal à 480s pour un matériau de substrat de deuxième type SiSiC.

Dans le cas de bille de silice de diamètre 1 micron le temps du procédé de gravure est multiplié par 2 par rapport aux billes de diamètre 530nm, soit par exemple 1200s pour un substrat de premier type SiC.

Les conditions des procédés de gravure définies ci-dessus sont des conditions optimisées pour obtenir la sélectivité (rapport des vitesses de gravure entre le masque de billes de silice et le matériau à graver de type SiC ou SiSiC) permettant d'aboutir à un rapport de forme des microstructures, défini comme le rapport de leur hauteur sur leur largeur, d'environ 1, c'est-à-dire compris entre 0,3 et 5.

D'autres chimies de gravure peuvent être utilisées, en particulier les chimies fluorées.

Suivant la Figure 6, un mécanisme de gravure sèche dit de « bombardement ionique » est mis en oeuvre dans les procédés de fabrication des Figures 4 et 5.

Selon ce mécanisme représenté par les flèches 322, 324, 326, les ions issus du plasma de SF₆ attaquent frontalement de manière peu sélective et anisotrope la surface du substrat qui est accessible au travers des interstices de passage existant entre les billes de masquage. L'efficacité de l'attaque est d'autant plus élevée que l'accès à la surface du matériau au travers du tapis de billes est facile. Sur la Figure 6, les longueurs de flèches d'attaque 322, 324, 326, proportionnelles à l'intensité et l'efficacité de l'attaque par plasma décroissent en partant d'un point 330 de surface du substrat à « ciel ouvert » pour aller vers un point de contact 332 de la bille de masquage 328. De manière connexe, la gravure par bombardement ionique de la surface du substrat est accompagnée d'une gravure du masquage par érosion ionique de la surface des billes de masquage, l'érosion de la surface des billes de masquage ayant un effet sur la vitesse de gravure. Ce mécanisme dit de « bombardement ionique » est à l'origine de la forme des microstructures décrites dans les Figures 1 à 3.

Ainsi, le procédé des Figures 4 et 5 permet d'obtenir les structurations comme celles décrites sur les Figures 1 à 3.

Les spectres de réflectivité obtenus des surfaces optiques antireflet sélectives décrites notamment, dans les Figures 1 à 3, sont analogues au spectre 402 illustré en Figure 7, mesuré pour une structuration d'un matériau SiSiC. La réflectivité, mesurée dans le domaine du visible et du proche infrarouge, c'est-à-dire pour les longueurs d'ondes comprises entre 0,3 et 2,5 microns, est fortement diminuée, ce qui permet donc la réalisation d'un absorbeur solaire performant.

Les mesures de spectre ont été réalisées sur un même échantillon de surface texturée en SiSiC par un premier appareil de mesure qui a fourni une première courbe 404 de spectre dans le domaine visible, et par un deuxième appareil de mesure qui a fourni une deuxième courbe 406 de spectre dans le domaine infrarouge.

Suivant la Figure 7, les spectres de réflectivité 404, 406 dans les domaines visibles et infrarouge montrent leur différence de réflectivité, une faible réflectivité ou forte absorption pour un milieu épais non transparent étant observée dans le domaine visible, et une relativement forte réflectivité ou faible émissivité selon la loi de Kirchhoff étant observée dans le domaine infrarouge IR. Ici, une absorption solaire de 95,9% et une émissivité à 500°C de 67% sont mesurées.

Suivant la Figure 8, les spectres de réflectivité des surfaces optiques utilisant des matériaux SiC et SiSiC avant et après structurations sont rassemblés.

Un premier spectre 414 illustre l'évolution de la réflectivité, exprimée en pourcentage sur une échelle linéaire, en fonction de la longueur d'onde, exprimée en micron sur une échelle logarithmique, pour une surface optique brute non texturée ou lisse en carbure de silicium.

Un deuxième spectre 416 illustre l'évolution de la réflectivité en fonction de la longueur d'onde pour une surface optique antireflet SiC en carbure de silicium, la surface optique antireflet SiC étant texturée avec un masque de billes auto-organisées de diamètre 0,5 microns (µm).

Un troisième spectre 418 illustre l'évolution de la réflectivité en fonction de la longueur d'onde pour une surface optique brute non texturée ou lisse en carbure de silicium enrichi en silicium SiSiC.

Un quatrième spectre 420 illustre l'évolution de la réflectivité en fonction de la longueur d'onde pour une surface optique antireflet SiSiC en carbure de silicium enrichie en silicium, la surface optique antireflet SiSiC étant texturée avec un masque de billes auto-organisées de diamètre 0,5 microns (µm).

La comparaison des deuxième et quatrième spectres 416, 420, avec les premier et troisième spectres 414, 418, montrent la forte diminution de réflectivité et donc d'amélioration de l'absorption dans le domaine du visible et du proche infrarouge pour les deux types de matériaux (SiC, SiSiC) à base de carbure de silicium.

Il est à remarquer que le procédé de fabrication selon l'invention qui utilise une gravure sèche comporte un effet technique particulier lorsque l'utilisation d'un masque de billes pendant l'étape de gravure est omise. En effet, comme montré sur la Figure 9, sans masque de billes un micro-masquage parasite aux petites dimensions apparaît sur la surface optique à base de carbure de silicium à cause du dépôt de carbone, ce micro-masquage étant lié au dépôt de molécules carbonées issues du gaz de gravure et des sous-produits de la réaction de gravure. Ce micro-masquage a pour effet la création d'un tapis 432 de microstructures parasites 434 en forme d'aiguilles d'une centaine de nanomètres de largeur au maximum sur la surface optique 442 ainsi obtenue.

A l'inverse, dans le cas de la présence de silice utilisée dans les billes auto-organisées du masque prévu dans le procédé de fabrication selon l'invention, de l'oxygène présent dans la composition des billes est libéré pendant la gravure et modifie la composition des produits de réaction en évitant l'accumulation de carbone à la surface du substrat et évite ainsi le micro-masquage parasite. Il en résulte alors la structure hexagonale compacte de dômes lisses qui vont présenter une bonne résistance à l'oxydation.

Les structures des surfaces optiques antireflet telles que décrites dans les Figures 1 à 3 ou obtenues par les procédés de fabrication décrits dans les Figures 4 à 6 conviennent très bien aux absorbeurs solaires et présentent le double avantage d'une très bonne capacité d'absorption du rayonnement solaire et d'une excellente résistance à l'oxydation sous air ou autre milieu oxydant.

Suivant la Figure 10, une vue optique d'un échantillon 452 d'une surface antireflet de carbure de silicium enrichie SiSiC suivant la deuxième forme de réalisation de la Figure 3, obtenue après une illumination solaire sous 745 W/m² concentrée avec un facteur de concentration 1000 en un spot de concentration 454 de 10 mm de diamètre et une montée en température en ce spot à 676°C, montre que la structure de la surface réalisée sur le carbure de silicium enrichi en silicium SiSiC ne présente aucune détérioration après exposition sous forte concentration solaire sous air à près de 700°C. Le spot de concentration ne peut pas être distingué sur cette vue du reste de la surface de l'échantillon.

A l'inverse et suivant la Figure 11, une vue optique, analogue à celle de la Figure 10, d'un échantillon 462 d'une surface de molybdène Mo, nano-structurée suivant le procédé de la demande de brevet précité WO 2015/114519 A1, et obtenue après une illumination solaire sous 810 W/m2 concentrée avec un facteur de concentration 1000 en un spot de concentration 464 de 10 mm de diamètre et l'atteinte d'une température en ce spot de 582°C, montre que le matériau de molybdène nano-structuré s'oxyde en surface en le spot de concentration 464, distinguable sur la Figure 11 par une teinte plus claire, et se détériore très fortement sous air.

La structure de la surface optique antireflet 452 suivant la deuxième forme de réalisation de la Figure 3 présente une meilleure résistance à l'oxydation que celle 462 du molybdène nano-structuré de la Figure 11 qui présente des craquelures et des délaminations sous l'effet de son oxydation à l'air.

Suivant la Figure 12, un premier spectre 472 et un deuxième spectre 474 de réflectivité d'un absorbeur en carbure de silicium enrichi SiSiC dont la surface est structurée suivant la deuxième forme de réalisation de la Figure 3 sont illustrés. Les premier et deuxième spectres 472, 474 sont respectivement les spectres mesurés avant et après exposition à un rayonnement solaire concentré par une lentille de Fresnel de grossissement 1000 et de dimensions 33x33 cm2 sous 900 W/m2 de radiation solaire incidente.

Les premier et deuxième spectres 472, 474 confirment la très bonne résistance à l'oxydation des absorbeurs structurés selon l'invention, les deux spectres de réflectivité avant et après l'exposition solaire étant superposables.

Suivant la Figure 13, des spectres de réflectivité, 481, 482, 483, 484, 485, 486, 487, 488, mesurés dans les domaines du visible et de l'infrarouge d'un absorbeur en carbure de silicium enrichi SiCSi dont la surface est structurée suivant la deuxième forme de réalisation de la Figure 3, est illustrée. Les spectres 481, 482, 483, 484 dans le domaine du visible, respectivement les spectres 485, 486, 487, 488 sont mesurés à différents instants respectifs, 0 heure, 3 heures, 15 heures, 25 heures, lors d'un vieillissement sous air à une température de 1000°C.

La Figure 13 confirme l'intégrité des absorbeurs structurés selon l'invention pour des températures de vieillissement extrêmement élevés de l'ordre de 1000° C, sous air, avec des spectres dans le domaine visible 481, 482, 483, 484 et dans le domaine infrarouge 485, 486, 487, 488 inchangés entre 0 et 25 heures.

Suivant la Figure 14, l'évolution temporelle 492 de l'absorption solaire mesurée d'un absorbeur solaire en carbure de silicium enrichi SiSiC dont la surface d'exposition est structurée suivant la deuxième forme de réalisation de la Figure 3 est illustrée, le vieillissement ayant lieu à une température de 1000° sous air. Il apparait que l'absorption solaire et à travers elle le paramètre de réflectivité reste quasiment inchangée au cours du temps pour des températures extrêmes et confirme les excellentes performances en durée de vie des absorbeurs structurés selon l'invention.

Suivant la Figure 15, l'évolution temporelle 502 de l'absorption solaire mesurée de deux échantillons d'un absorbeur solaire en carbure de silicium SiC dont la surface d'exposition est structurée suivant la première forme de réalisation de la Figure 1, est illustrée, les deux échantillons étant exposés à l'air pour trois hautes températures égales à 800°C, 1000°C et 1200°C.

Un premier jeu 504 et un deuxième jeu 506 de données de mesures concernent respectivement les premier et deuxième échantillons pour une température de 800°C.

Un troisième jeu 508 et un quatrième jeu 510 de données de mesures concernent les premier et deuxième échantillons pour une température de 1000°C.

Un cinquième jeu 512 et un sixième jeu 514 de données de mesures concernent les premier et deuxième échantillons pour une température de 1200°C.

Les premier, deuxième, troisième, quatrième, cinquième, sixième jeux de données 504, 506, 508, 510, 512, 514 confirment une excellente résistance à l'oxydation sous air à haute température de l'absorbeur solaire pour le matériau SiC structuré selon l'invention, par exemple avec des dômes sphériques ou paraboloïdes de 0.5 micron ou de 1 micron de diamètres. Les performances d'absorption sont ici maintenues au-dessus de 95% au cours du temps, indépendamment des extrêmes hautes températures considérées ici pour le vieillissement.

Ces excellentes propriétés de durée de vies sont obtenues grâce à la résistance intrinsèque du carbure de silicium à l'oxydation mais aussi aux formes particulières de structures réalisées selon l'invention.

En effet comme le montre la Figure 16, la forme accidentée ou irrégulière et la petite taille de microstructures parasites 552, telles que celles de la Figure 9 et représentatives de l'état de la technique, sont modifiées nettement lors d'un vieillissement après 250 heures sous air à une température permanente de 1000°C en étant totalement oxydée par une couche d'oxyde de dimension relativement importante.

A l'inverse comme le montre la Figure 17, la forme régulière (sphérique, conique adoucie, parabolique) et la relativement grande taille des microstructures d'une surface selon l'invention des Figures 1 et 3, permettent aux microstructures 562 de conserver sensiblement la même forme et la même taille en étant légèrement oxydées en surface. Ainsi la propriété optique de faible réflectivité / forte absorption est conservée en conditions extrêmes de température et de milieu oxydant.

Les applications possibles de l'invention concernent notamment:
.- les absorbeurs solaires sélectifs,
.- les systèmes comprenant des absorbeurs sélectifs de formes par exemple planes ou cylindriques.

## Revendications

1. Surface optique antireflet, à absorption dans le domaine du visible et du proche infrarouge, en particulier pour des absorbeurs solaires thermiques, apte à fonctionner à des températures élevées, et comprenant
un substrat (4 ; 104), constitué d'une épaisseur d'un premier matériau à base de carbure de silicium SiC, et ayant une face (6 ; 106) plane ou courbe d'exposition, et
un ensemble (8) de microstructures (12, 14, 16, 18, 20, 22 ; 108) de texturation tapissant la face (6 ; 106),
ladite surface optique antireflet étant **caractérisée en ce que**
chaque microstructure (12, 14, 16, 18, 20, 22 ; 108) est formée par une unique protubérance réalisée dans le premier matériau, disposée sur et d'un seul tenant avec le substrat (4 ; 104), et
les microstructures (12, 14, 16, 18, 20, 22 ; 108) ont une même forme et mêmes dimensions, et sont réparties sur la face (6 ; 106) du substrat (4 ; 104) selon un motif périodique bidimensionnel, et
la forme de chaque microstructure (12, 14, 16, 18, 20, 22 ; 108) est lisse et régulière en ayant un sommet unique et un rayon de courbure qui varie continûment depuis le sommet de la microstructure (12, 14, 16, 18, 20, 22 ; 108) jusqu'à la face (6 ; 106) du substrat (4 ; 104).

2. Surface optique antireflet selon la revendication 1, dans laquelle le premier matériau à base de carbure de silicium est
du carbure de silicium SiC monocristallin ou poly-cristallin, ou
du carbure de silicium SiC monocristallin ou poly-cristallin, enrichi en silicium sous forme d'îlots de silicium Si.

3. Surface optique antireflet selon l'une quelconque des revendications 1 à 2, dans laquelle
la surface de chaque microstructure (12, 14, 16, 18, 20, 22 ; 108) présente un même maximum en hauteur h situé dans une zone centrale et correspondant à la hauteur de la microstructure (12, 14, 16, 18, 20, 22 ; 108) et décroit depuis le sommet vers un bord B d'une base de la microstructure (12, 14, 16, 18, 20, 22 ; 108).

4. Surface optique antireflet selon l'une quelconque des revendications 1 à 3, dans laquelle
la surface de chaque microstructure (12, 14, 16, 18, 20, 22 ; 108) comporte une partie de la surface d'une calotte sphérique, elliptique ou parabolique.

5. Surface optique antireflet selon l'une quelconque des revendications 1 à 4, dans laquelle
chaque microstructure (12, 14, 16, 18, 20, 22 ; 108) a sensiblement un même diamètre de base d supérieur ou égal à 0,3 µm et inférieur ou égal 5 µm, de préférence compris entre 0,5 µm et 2 µm, et
la même hauteur maximale h de chaque microstructure (12, 14, 16, 18, 20, 22 ; 108) est supérieure ou égale à 0,5 fois le diamètre de base d et inférieure ou égale à 1,5 fois le diamètre de base d.

6. Surface optique antireflet selon l'une quelconque des revendications 1 à 5, dans laquelle
le rayon de courbure de chaque microstructure (12, 14, 16, 18, 20, 22 ; 108) est supérieur ou égal à 0,1 µm et distribué autour d'une valeur centrale de rayon de courbure comprise entre 0,25 µm et 1 µm.

7. Surface optique antireflet selon l'une quelconque des revendications 1 à 6, dans laquelle
l'agencement des microstructures (12, 14, 16, 18, 20, 22 ; 108) sur la face d'exposition du substrat est réalisé sous la forme d'un pavage de réseaux élémentaires (60; 70) de microstructures,
les réseaux élémentaires ayant un même motif de maille compris dans l'ensemble formé par les mailles hexagonales, les mailles carrés, les mailles triangulaires, et étant **caractérisé par** un degré de compacité des microstructures entre elles.

8. Absorbeur solaire comportant une surface optique antireflet définie selon l'une des revendications 1 à 7.

9. Procédé de fabrication d'une surface optique antireflet, en particulier pour des absorbeurs solaires thermiques, apte à fonctionner à des températures élevées,
ledit procédé de fabrication comprenant
une première étape (204) consistant à fournir un substrat, constitué d'une épaisseur d'un premier matériau à base de carbure de silicium SiC, et ayant une face d'exposition plane ou courbe,
**caractérisé en ce qu'**il comprend en outre
une deuxième étape (206 ; 306), exécutée à la suite de la première étape, consistant à réaliser un ensemble de microstructures de texturation, tapissant la face,
chaque microstructure étant formée par une unique protubérance réalisée dans le premier matériau, et disposée sur et d'un seul tenant avec le substrat, et
les microstructures ayant une même forme et mêmes dimensions, étant réparties sur la face du substrat selon un motif périodique bidimensionnel, et
la forme de chaque microstructure étant lisse et régulière en ayant un sommet unique et un rayon de courbure qui varie continument depuis le sommet jusqu'à la face.

10. Procédé de fabrication d'une surface antireflet selon la revendication 9, dans lequel
la première étape (204) consiste :
soit à fournir du carbure de silicium SiC monocristallin ou poly-cristallin, ou
soit à fournir du carbure de silicium SiC monocristallin ou poly-cristallin, enrichi en silicium sous forme d'îlots de silicium Si.

11. Procédé de fabrication d'une surface antireflet selon l'une quelconque des revendications 9 à 10, dans lequel
la première étape (204) consiste :
soit à comprimer de manière isostatique une poudre de carbure de silicium SIC, ou
soit à faire croitre du carbure de silicium SiC poly-cristallin, ou
soit à faire croitre du carbure de silicium SiC monocristallin, ou
soit à infiltrer du silicium à haute température dans une matrice carbonée poreuse.

12. Procédé de fabrication d'une surface antireflet selon l'une quelconque des revendications 9 à 11, dans lequel
la deuxième étape (206 ; 306) comprend les étapes successives consistant à
dans une troisième étape (208) déposer une monocouche compacte de particules en un deuxième matériau à la surface du substrat, et
dans une quatrième étape (210) graver par un procédé de gravure sèche le substrat du côté de la face d'exposition au travers d'interstices existant entre les particules,
le deuxième matériau étant compris dans l'ensemble formé par la silice (SiO₂), le polystyrène (PS) ou tout autre matériau sous forme de billes de dimension requise.

13. Procédé de fabrication d'une surface antireflet selon la revendication 12, dans lequel
une réduction de la taille et de la forme des particules par gravure sèche est mise en oeuvre,
soit dans une cinquième étape (212) exécutée pendant la quatrième étape (210) en même temps que la gravure sèche du substrat,
soit dans une sixième étape (312) interposée entre la troisième étape (208) et la quatrième étape (210).

14. Procédé de fabrication d'une surface antireflet selon l'une quelconque des revendications 12 à 13, dans lequel
le dépôt du film compact de particules mis en oeuvre au cours de la troisième étape (208) est réalisé
soit par une technique de dépôt faisant intervenir l'interface air/liquide pour ordonner les particules comprise dans l'ensemble formé par la technique de Langmuir Blodgett, la technique de Langmuir Shaefer, la méthode vortique de surface, la technique du transfert par flottaison, la technique de l'écoulement laminaire fin dynamique et mobile,
soit par une technique de depôt faisant intervenir exclusivement des particules en solution colloïdale comprise dans l'ensemble formé par le dépôt électrophorétique, le dépôt horizontal par évaporation d'un film, le dépôt par évaporation d'un bain, le dépôt par retrait vertical d'un substrat immergé et le dépôt horizontal par retrait forcé de la ligne de contact.

15. Procédé de fabrication d'une surface antireflet selon l'une quelconque des revendications 12 à 14, dans lequel
le procédé de gravure sèche mis en oeuvre dans la quatrième étape (210) est une gravure réactive ionique utilisant un mélange gazeux d'hexafluorure de soufre (SF₆) et de dioxygène (O₂) dans un rapport de 5/3.

16. Procédé de fabrication d'une surface antireflet selon la revendication 15, dans lequel
la vitesse de gravure du matériau substrat Vsub et la vitesse de gravure Vpar des particules, la sélectivité de gravure Sg, définie comme le rapport de la vitesse de gravure du substrat sur la vitesse de gravure des particules, et le temps de gravure sont réglés de façon à consommer la totalité des particules et éviter la création d'arêtes vives sur la surface du substrat.

17. Procédé de fabrication d'une surface antireflet selon l'une quelconque des revendications 12 à 16, comprenant une septième étape (314) de retrait des particules exécutée après la quatrième étape (210).
